(19) Europäisches Patentamt

European Patent Office

Office européen des brevets

(11) Veröffentlichungsnummer: **0 264 685 B1**

(12) # EUROPÄISCHE PATENTSCHRIFT

(45) Veröffentlichungstag der Patentschrift: **02.03.94**

(21) Anmeldenummer: **87114377.2**

(22) Anmeldetag: **02.10.87**

(51) Int. Cl.⁵: **H04N 5/228**

(54) **Fernsehkamera mit einem Target.**

(30) Priorität: **09.10.86 DE 3634414**

(43) Veröffentlichungstag der Anmeldung:
**27.04.88 Patentblatt 88/17**

(45) Bekanntmachung des Hinweises auf die
Patenterteilung:
**02.03.94 Patentblatt 94/09**

(84) Benannte Vertragsstaaten:
**AT BE CH DE ES FR GB GR IT LI LU NL SE**

(56) Entgegenhaltungen:
**DE-A- 2 937 284**
**DE-A- 3 243 486**
**FR-A- 2 061 515**
**GB-A- 1 047 260**
**GB-A- 2 162 019**

(73) Patentinhaber: **Deutsche Thomson-Brandt GmbH**
**Hermann-Schwer-Strasse 3**
**Postfach 1307**
**D-78003 Villingen-Schwenningen(DE)**

(72) Erfinder: **Platte, Hans-Joachim, Dr.-Ing.**
**Königsberger Weg 22**
**D-3005 Hemmingen 4(DE)**
Erfinder: **Schütze, Herbert, Dipl.-Ing.**
**Wollkämmerei 4**
**D-3000 Hannover 81(DE)**
Erfinder: **Keesen, Heinz-Werner, Dr.-Ing.**
**Tiestestrasse 5**
**D-3000 Hannover 1(DE)**
Erfinder: **Haupt, Dieter, Dipl.-Ing.**
**Davenstedter Strasse 58**
**D-3000 Hannover 91(DE)**
Erfinder: **Plantholt, Martin, Dr.-Ing.**
**Deveser Strasse 11**
**D-3005 Hemmingen 1(DE)**

(74) Vertreter: **Einsel, Robert, Dipl.-Ing.**
**Deutsche Thomson-Brandt GmbH**
**Patent- und Lizenzabteilung**
**Göttinger Chaussee 76**
**D-30453 Hannover (DE)**

## Beschreibung

Fernsehkameras enthalten unter anderem ein Kameragehäuse, ein Objektiv und eine zur Erzeugung des Videosignals vorgesehene Speicherplatte, im folgenden Target genannt. Auf dem Target wird mittels der Optik ein Bildfeld erzeugt, aus dem durch Abtastung mit einem Elektronenstrahl oder sonstige Abtastung entsprechend einem Fernsehraster das Videosignal erzeugt wird.

Insbesondere bei kleinen tragbaren Kameras besteht in der Praxis die Gefahr, daß das Bild durch eine starke ungewollte Beschleunigung des Kameragehäuses beeinträchtigt, d. H. verwackelt wird. Das bedeutet, daß z.B. das gewünschte Bildfeld aus dem Bereich des Target teilweise herausgerät und Teile des gewünschten Bildes kurzzeitig verlorengehen.

Derartige Verwacklungen lassen sich weitestgehend ausschalten oder verringern durch Anordnung des Kameragehäuses auf einem Stativ oder durch Hilfsmittel, mit denen die Kamera am Körper getragen wird. Derartige Mittel sind jedoch in der Praxis nicht immer anwendbar oder auch oft nicht ausreichend.

Der Erfindung liegt die Aufgabe zugrunde, bei einer Fernsehkamera die Auswirkungen von unerwünschten starken Beschleunigungen des Kameragehäuses auf das mit der Kamera erzeugte Videosignal zu verringern.

Diese Aufgabe wird durch die im Anspruch 1 beschriebene Erfindung gelöst. Vorteilhafte Weiterbildungen der Erfindung sind in den Unteransprüchen beschrieben.

Bei der Erfindung wird also eine starke, ungewollte Beschleunigung des Kameragehäuses messtechnisch erfaßt und in eine elektrische Stellgröße umgewandelt. Diese Stellgröße wirkt auf die Lage des Abtastrasters auf dem Target so ein, daß die durch die ungewollte Beschleunigung verursachte Bewegung des Bildfeldes in den beiden in der Ebene des Targets orthogonalen Richtungen kompensiert wird. Die Ermittlung der starken Beschleunigung des Kameragehäuses ist auch dadurch möglich, daß die von der Kamera erzeugten Signale jeweils von zwei zeitlich aufeinanderfolgenden Bildern verglichen werden. Wenn die Differenz zwischen diesen Signalen oder eines Teiles derselben einen bestimmten Schwellwert überschreitet, so kann dies als Indiz dafür gewertet werden, daß eine unerwünschte Beschleunigung vorliegt. Vorzugsweise wird in den Weg der Stellgröße ein Schwellwert eingeführt, um die ungewollten starken Beschleunigungen und Bewegungen des Kameragehäuses durch eine Verwacklung von den gewollten, langsameren Beschleunigungen und Bewegungen bei einem Schwenkvorgang bei Verfolgung einer bestimmten Szene zu unterscheiden. Es ist auch möglich, das von der Kamera gelieferte Signal eines Bildes zunächst in einen Speicher einzugeben und erst dann zu verwerten, wenn während der Abtastung des Bildfeldes auf dem Target keine Verwacklung registriert wurde. Sobald während der Abtastung des Bildfeldes eine Verwacklung registriert wird, wird das gesamte Bild nicht verwertet, sondern durch ein gespeichertes Bild aus einem vorangehenden Zeitabschnitt ersetzt. Die dadurch bewirkte geringe Beeinflussung der Bewegungsphase ist weniger störend als eine Verwacklung des gesamten Bildes.

Die Erfindung wird im folgenden an Hand der Zeichnung erläutert. Darin zeigen

Fig. 1    die Lage des Bildfeldes auf dem Target,

Fig. 2    im Prinzip eine erfindungsgemäße Schaltung und

Fig. 3    eine Weiterbildung der Schaltung nach Fig. 2.

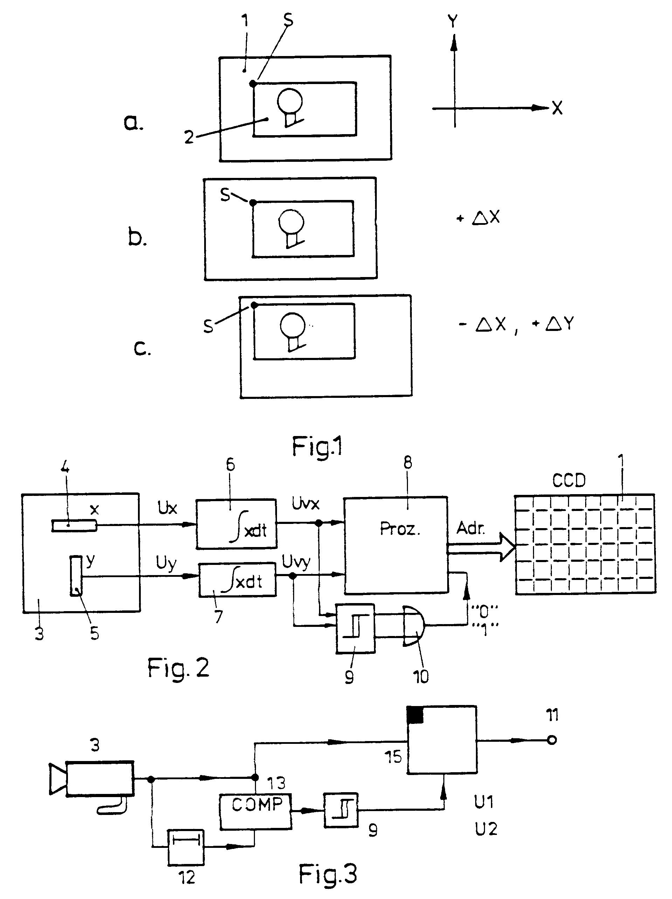

In Fig. 1a ist mit dem Objektiv der Kamera auf dem Target 1 ein Bildausschnitt abgebildet. Das gesamt Target 1 ist homogen ausgebildet und zur Erzeugung des Videosignals geeignet. Die Abtastung des Target 1 erfolgt jedoch nur über den Bereich des gewünschten Bildfeldes 2 mit dem Startpunkt S am oberen linken Bildrand in Form eines Fernsehrasters zeilenweise. Der Bildbereich zwischen dem äußeren Rand des Bildfeldes 2 und dem Rand des Target 1 wird somit nicht abgetastet und für die Erzeugung des Videosignals nicht ausgenutzt. Das erzeugte Videosignal stellt also nur den Bildausschnitt des Bildfeldes 2 dar. Die beiden in der Ebene des Target 1 orthogonalen Richtungen sind mit x, y bezeichnet. Die Daten von x, y geben also die Lage des Bildfeldes 2 innerhalb des Target 1 an.

In Fig. 1b ist durch eine Verwacklung, und zwar durch eine ruckartige ungewollte Verschiebung des Kameragehäuses und damit des Target 1, das Bildfeld 2 auf dem Target 1 in positiver x-Richtung verschoben. Diese Verschiebung wird erfaßt und dementsprechend der Startpunkt S der Rasterablenkung um den Betrag + $\Delta$ x so verschoben, daß trotz der Verwacklung die Abtastung des Target 1 wiederum im Punkt S, also zu Beginn des gewünschten Bildfeldes 2, beginnt. Die Verwacklung des Kameragehäuses wirkt sich dadurch im erzeugten Videosignal nicht aus. Das Videosignal stellt also trotz der Verwacklung wieder genau das Bild des verschobenen Bildfeldes 2 dar.

In Fig. 1c ist durch eine Verwacklung das Bildfeld 2 auf dem Target 1 in negativer x-Richtung und in positiver y-Richtung verschoben. Dementsprechend wird auch der Startpunkt S der rasterförmigen Abtastung des Target 1 verschoben. Es wird also in allen Fällen stets das gewünschte Bildfeld 2 beginnend vom Startpunkt S unabhängig von der Richtung und dem Maß der Verwacklung abgetastet.

In Fig 2 enthält das Kameragehäuse 3 einen Beschleunigungssensor 4 für die Richtung x und einen Beschleunigungssensor 5 für die Richtung y. Diese Sensoren liefern folgende Spannungen, die die Beschleunigung des Gehäuses 3 in den beiden Richtungen x und y anzeigen:

$U_x \sim d^2x/dt^2$ und
$U_y \sim d^2y/dt^2$.

Diese Spannungen werden in den Integratoren 6, 7 durch mathematische Integration in Spannungen umgesetzt, die die Geschwindigkeit der Bewegungen des Kameragehäuses 3 darstellen:

$U_{vx} = dx/dt \cdot K_1$
$U_{vy} = dy/dt \cdot K_2$

$K_1$, $K_2$ : Proportionalitätskonstanten

Diese Spannungen werden dem Prozessor 8 zugeführt. Dieser erzeugt daraus ein Adreßsignal Adr., das einen Bewegungsvektor nach Betrag und Richtung darstellt. Dieses Adreßsignal steuert auf dem als CCD-Schaltung ausgebildeten Target 1 den Startpunkt S des Abtastrasters eines Bildfeldes 2 in der in Fig. 1 beschriebenen Weise.

Die Spannungen von den Ausgängen der Integratoren 6, 7 werden außerdem der Schwellwertschaltung 9 zugeführt, die nur oberhalb eines Schwellwertes Spannungen an die ODER-Stufe 10 abgibt. Bei einer gewollten Schwenkbewegung der Kamera 3, also niedrigen Werten der Beschleunigung und der Geschwindigkeit, erzeugt die Stufe 10 eine Spannung mit dem Wert "0", durch die der Prozessor 8 gesperrt wird. Das Adreßsignal am Ausgang erscheint dann nicht, weil eine ungewollte ruckartige Bewegung nicht vorliegt und somit die Korrektur nicht erforderlich ist. Wen eine oder beide Spannungen am Eingang der Schwellwertschaltung 9 den Schwellwert überschreiten und somit das Vorliegen einer ungewollten, starken Beschleunigung des Gehäuses 3 registriert wird, geht die Spannung am Ausgang der Stufe 10 auf "1" und aktiviert den Prozessor 8in der beschriebenen Weise.

Fig. 3 zeigt zwei Abwandlungen der Anordnung nach Fig. 2. Zunächst sind die mechanischen Beschleunigungssensoren 4, 5 ersetzt durch eine elektronische Schaltung. Das Signal eines Bildes wird einmal direkt und einmal über eine Verzögerungsstufe 12 für die Dauer eines Bildes dem Komparator 13 zugeführt. Der Komparator 13 vergleicht die Signale von zwei oder mehr zeitlich aufeinanderfolgender Bildern oder von definierten Teilen oder Auszügen der Bilder. Bei Normalbetrieb einschließlich einer gewollten Schwenkbewegung übersteigt diese Differenz einen Schwellwert nicht. Bei einer ungewollten ruckartigen Bewegung, also einem Wackeln des Gehäuses 3, wird dieser Schwellwert überschritten. Auf diese Weise wird mit der Schwellwertschaltung 9 wieder die die Verwacklung anzeigende Stellgröße Us erzeugt.

Die zweiten Abwandlung ist folgende: Die von der Kamera 3 gelieferten Bilder werden zunächst dem Speicher 15 zugeführt, der etwa die Signale von zwei bis drei Bildern speichern kann. Bei der Abtastung eines Bildes wird das erzeugte Videosignal zunächst nicht auf die Ausgangsklemme 11 gegeben, sondern in dem Speicher 15 gespeichert. Wenn am Ende der Abtastung eines Bildes keine ungewollte Bewegung der Kamera 3, also keine Verwacklung registriert wurde, erscheint eine Spannung U1, die das Auslesen des gespeicherten Bildsignals dieses Bildes bewirkt, so daß dieses Signal an der Klemme 11 erscheint. Wenn während der Ab-tastung des Bildes, unabhängig vom Zeitpunkt innerhalb des Bildes, eine Verwacklung registriert wurde, erscheint eine Spannung U2. Die Spannung U2 bewirkt, daß das Signal dieses Bildes, das der Verwacklung unterliegt, nicht ausgewertet wird. Stattdessen wird das Signal eines zeitlich vorangehenden Bildes ohne Verwacklung, das vorher in dem Speicher 15 gespeichert ist, ausgelesen und der Klemme 11 zugeführt. Gestörte Bilder, in denen durch die Schaltung 13, 9 eine Verwacklung registriert wurde, werden also jeweils nicht verwertet und durch nicht gestörte Bilder aus einem davor liegenden Zeitraum ersetzt.

Die Stellgröße oder das Adreßsignal am Ausgang des Prozessors 8 beinhaltet z.B. eine neue Startadresse für den Startpunkt S der Rasterabtastung eines Bildfeldes bei CCD-Arrays. Die Ausgangsspannung des Prozessors kann auch eine analoge Korrekturspannung bei einer Röhrenkamera sein. Der Vergleich der Signale aufeinanderfolgender Bilder in dem Komparator 13 in Fig. 3 kann sich auch auf bestimmte ausgewählte Bildbereiche erstrecken. Dabei ist auch ein Vergleich über mehrere aufeinanderfolgende Vollbilder möglich, eine sogenannte zweidimensionale Autokorrelation. Durch eine solche Lösung läßt sich ebenfalls ein Bewegungsvektor ermitteln, also eine Stellgröße oder eine Adreßspannung, die das Maß und die Richtung der ungewollten Bewegung der Kamera 3 angibt und entsprechend den Startpunkt S verschiebt.

**Patentansprüche**

1. Fernsehkamera mit einem Target, auf das mittels einer Optik ein gewünschtes Bildfeld (2) projiziert wird und das zur Erzeugung des Videosignal entlang eines Rasters abgetastet wird, wobei das Target (1) größer ist als das Bildfeld (2) und aus einer Bewegung der Kamera (3) eine Stellgröße (Uvx, Uvy) gewonnen wird, die eine Verschiebung des Startpunktes (S) des Abtastrasters auf dem Target ermöglicht, **dadurch gekennzeichnet**, daß beim Auftreten der Stellgröße (Uvx, Uvy) das Signal des gerade abgetasteten Bildes nicht verwertet und durch das Signal eines vorangegangenes Bildes ersetzt wird.

2. Fernsehkamera nach Anspruch 2, **dadurch gekennzeichnet**, daß an dem Kameragehäuse zwei Beschleunigungssensoren (4, 5) für zwei orthogonale Richtungen (X, Y) in der Targetebene vorgesehen sind, deren Ausgangsspannungen (Ux, Uy) zwei Integratoren (6, 7) zugeführt sind, aus deren die Geschwindigkeiten darstellenden Ausgangsspannungen (Uvx, Uvy) die Stellgröße (Us) gewonnen wird.

3. Kamera nach Anspruch 1, **dadurch gekennzeichnet**, daß die Ausgangsspannungen (Uvx, Uvy) der Integratoren (6, 7) einer Schwellwertschaltung (9) zugeführt sind, die unterhalb eines Schwellwertes die Verschiebung des Startpunktes (S) verhindert.

4. Kamera nach Anspruch 1, **dadurch gekennzeichnet**, daß jeweils die von der Kamera (3) gelieferten Signale von Bildern in einem Speicher (15) eingelesen werden und ein Bild nur dann ausgelesen und verwertet wird, wenn während der Abtastung dieses Bildes keine ruckartige Bewegung registriert wurde.

5. Kamera nach Anspruch 1, **dadurch gekennzeichnet**, daß die Stellgröße in einem Komparator (13) oder einem Korrelator gewonnen wird, der die Bildsignale aufeinanderfolgender Bilder oder Teile davon vergleicht und bei einer Signaldifferenz oberhalb eines Schwellwertes die Stellgröße (Us) erzeugt.

## Claims

1. Television camera with a target onto which a desired picture field (2) is projected by means of an optical system and which is scanned along a raster in order to produce the video signal, wherein the target (1) is larger than the picture field (2) and from a movement of the camera (3) a control value (Uvx, Uvy) is obtained which makes it possible to shift the starting point (S) of the scanning raster on the target, characterised in that when the control value (Uvx, Uvy) occurs the signal of the picture which has just been scanned is not utilised and is replaced by the signal of a preceding picture.

2. Television camera according to Claim 1, characterised in that two acceleration sensors (4, 5) are provided on the camera housing for two orthogonal directions (X, Y) in the target plane, the output voltages (Ux, Uy) of the said sensors being passed to two integrators (6, 7) and the control value (Us) being obtained from the output voltages (Uvx, Uvy) of the said integrators which represent the speeds.

3. Camera according to Claim 1, characterised in that the output voltages (Uvx, Uvy) of the integrators (6, 7) are passed to a threshold value circuit (9) which prevents the shifting of the starting point (S) below a threshold value.

4. Camera according to Claim 1, characterised in that in each case the signals supplied by the camera (3) are read into a store (15) and a picture is only read out and utilised when no jerky movement is registered during scanning of this picture.

5. Camera according to Claim 1, characterised in that the control value is obtained in a comparator (13) or a correlator which compares the picture signals of successive pictures or parts thereof and produces the control value (Us) in the event of a signal difference above a threshold value.

## Revendications

1. Caméra de télévision avec une cible (target) sur laquelle un champ d'image souhaité (2) est projeté au moyen d'une optique et qui est balayée le long d'une trame pour générer le signal vidéo, la cible (1) étant plus grande que le champ d'image (2) et une variable réglante (Uvx, Uvy) étant obtenue à partir d'un mouvement de la caméra (3) qui rend possible un décalage du point de départ (S) de la trame de balayage sur la cible, **caractérisée en ce** que, lors de l'apparition de la variable réglante (Uvx, Uvy), le signal de l'image qui vient d'être balayée n'est pas exploité et est remplacé par le signal d'une image précédente.

2. Caméra de télévision selon la revendication 2, **caractérisée en ce** que deux détecteurs d'accélération (4, 5) pour deux sens orthogonaux (X, Y) sont prévus sur le boîtier de la caméra dans le plan de la cible, détecteurs dont les tensions de sortie (Ux, Uy) sont amenées à deux intégrateurs (6, 7), la variable réglante (Us) étant obtenue à partir de leurs tensions de sortie (Uvx, Uvy) qui constituent les vitesses.

3. Caméra selon la revendication 1, **caractérisée en ce** que les tensions de sortie (Uvx, Uvy) des intégrateurs (6, 7) sont amenées à un circuit de seuil (9) qui empêche le décalage du point de départ (S) au-dessous d'un seuil.

4. Caméra selon la revendication 1, **caractérisée en ce** que respectivement les signaux d'images donnés par la caméra (3) sont mis en mémoire dans une mémoire (15) et qu'une image n'est extraite et exploitée que lorsqu'il n'a pas été enregistré de mouvement du type secousse pendant le balayage de cette image.

5. Caméra selon la revendication 1, **caractérisée en ce** que la variable réglante est obtenue dans un comparateur (13) ou un corrélateur qui compare les signaux d'image d'images successives ou de parties de celles-ci et qui produit la variable réglante (Us) lors d'une différence de signal au-dessus d'un seuil.

Fig.1

Fig. 2

Fig.3